# EUROPEAN PATENT APPLICATION

(11) **EP 4 629 084 A1**
(43) Date of publication of application: **08.10.2025**
(21) Application number: 23893327.9
(22) Date of filing: 30.08.2023
(51) Int. Cl.: G06F 9/54

(54) **DOCUMENT PROCESSING METHOD AND APPARATUS, ELECTRONIC DEVICE, AND STORAGE MEDIUM**

(30) Priority: 21.11.2022 CN 202211462732
(71) Applicant: Zhuhai Kingsoft Office Software Co., Ltd, Zhuhai, Guangdong 515000 (CN); Beijing Kingsoft Office Software, Inc., Beijing 100085 (CN); Wuhan Kingsoft Office Software Co., Ltd., Wuhan, Hubei 430074 (CN)
(72) Inventor: GE, Xiazhi, Zhuhai, Guangdong 515000 (CN)
(74) Representative: Botti & Ferrari S.p.A.
(86) International application number: PCT/CN2023/115868
(87) International publication number: WO 2024/109234

(57) **Abstract**

Disclosed are a method and an apparatus for document processing, an electronic device, and a storage medium. The method for document processing which is performed by a first device includes: determining whether there is a target operation that needs assistance in a case where the first device processes a document; and sending a request message to a server in a case where there is the target operation, in which the request message is configured for the server to select alternative devices based on capability information of at least one second device, and a target device among the alternative devices is configured to perform the target operation.

## Description

### Field

The present disclosure relates to, but is not limited to, the field of information technology, in particular to a method and an apparatus for document processing, an electronic device, and a storage medium.

### Background

Electronic devices have document processing functions such as a document editing function, but usually a single device has a limited number of capabilities or is not strong enough in some capabilities, and an edited document may have multiple editing requirements.

However, the single device may not meet editing requirements. In this case, a user may need to manually find a suitable device to perform a corresponding operation, then transfer a file generated by the operation to a current editing device, and insert content subjected to the operation into a document being edited based on a series of tedious operations of the user.

This results in problems such as low efficiency of document editing and complicated operations of a user.

### Summary

The disclosure provides a method and an apparatus for document processing, an electronic device, and a storage medium.

A first aspect of embodiments of the disclosure provides a method for document processing which is performed by a first device, including:
determining whether there is a target operation that needs assistance in a case where the first device processes a document; and
sending a request message to a server in a case where there is the target operation, in which
the request message is configured for the server to select alternative devices based on capability information of at least one second device, and a target device among the alternative devices is configured to perform the target operation.

A second aspect of embodiments of the disclosure provides a method for document processing which is performed by a server, including:
receiving a request message sent by a first device; the request message including operation information of a target operation on a document; and
determining alternative devices capable of performing the target operation according to the request message and capability information of at least one second device, the target device among the alternative devices being configured to assist the first device in performing the target operation.

A third aspect of embodiments of the disclosure provides an apparatus for document processing, including:
a first determination module configured to determine whether there is a target operation that needs assistance in a case where a first device processes a document; and
a first sending module configured to send a request message to a server in a case where there is the target operation, the request message being configured for the server to select alternative devices based on capability information of at least one second device, and a target device among the alternative devices being configured to perform the target operation.

A fourth aspect of embodiments of the disclosure provides an apparatus for document processing, including:
a second receiving module configured to receive a request message sent by a first device; the request message including operation information of a target operation; and
a third determination module configured to at least determine alternative devices capable of performing the target operation according to the request message and capability information of at least one second device, the target device among the alternative devices being configured to assist the first device in performing the target operation.

A fifth aspect of embodiments of the disclosure provides an electronic device, including:
a processor; and
a memory configured to store processor executable instructions, in which
the processor is configured to implement the method for document processing provided by either technical solution of the first aspect or the second aspect when running the executable instructions.

A sixth aspect of embodiments of the disclosure provides a computer-readable storage medium in which an executable program is stored, in which the executable program implements the method for document processing provided by either technical solution of the first aspect or the second aspect when executed by a processor.

The technical solutions provided in the embodiments of the present disclosure can include following beneficial effects.

When the first device needs other devices to assist in executing the target operation of the document, the first device may actively send a request message to the server, so that the server can determine alternative devices that can assist the first device in executing the target operation based on the received request message, and a target device among the alternative devices can execute the corresponding target operation, thus reducing problems of low efficiency and complicated operations caused by the user manually using other devices for execution because the first device cannot execute the target operation. Meanwhile, a phenomenon of a poor document processing effect caused by a poor effect of the first device executing the target operation itself is reduced, thus improving the document processing effect.

It is to be understood that both the foregoing general description and the following detailed description are exemplary and explanatory only and cannot limit the disclosure.

### Brief Description of the Drawings

The accompanying drawings, which are incorporated herein and constitute a part of the description, illustrate embodiments according to the present disclosure and together with the description, serve to explain the principles of the disclosure.
FIG. 1 is a schematic diagram showing an effect of a method for document processing according to an exemplary embodiment.
FIG. 2 is a schematic diagram showing an effect of a method for document processing according to an exemplary embodiment.
FIG. 3 is a schematic flowchart showing a method for document processing according to an exemplary embodiment.
FIG. 4 is a schematic flowchart showing a method for document processing according to an exemplary embodiment.
FIG. 5 is a schematic diagram of a software bus according to an exemplary embodiment.
FIG. 6 is a schematic diagram showing an effect of a method for document processing according to an exemplary embodiment.
FIG. 7 is a schematic diagram showing an effect of a method for document processing according to an exemplary embodiment.
FIG. 8 is a schematic flowchart showing a method for document processing according to an exemplary embodiment.
FIG. 9 is a schematic flowchart showing a method for document processing according to an exemplary embodiment.
FIG. 10 is a schematic flowchart showing a method for document processing according to an exemplary embodiment.
FIG. 11 is a schematic flowchart showing a method for document processing according to an exemplary embodiment.
FIG. 12 is a schematic structural diagram of an apparatus for file processing according to an exemplary embodiment.
FIG. 13 is a schematic structural diagram of an apparatus for file processing according to an exemplary embodiment.
FIG. 14 is a schematic structural diagram of an electronic device according to an exemplary embodiment.

### Detailed Description

Exemplary embodiments will be described in detail here, examples of which are illustrated in the accompanying drawings. When the following description refers to the accompanying drawings, unless otherwise indicated, the same numerals in different drawings represent the same or similar elements. The embodiments described in the following exemplary embodiments do not represent all embodiments according to the present disclosure. Rather, they are merely examples of the apparatuses and methods according to some aspects of the present disclosure, as detailed in the appended claims.

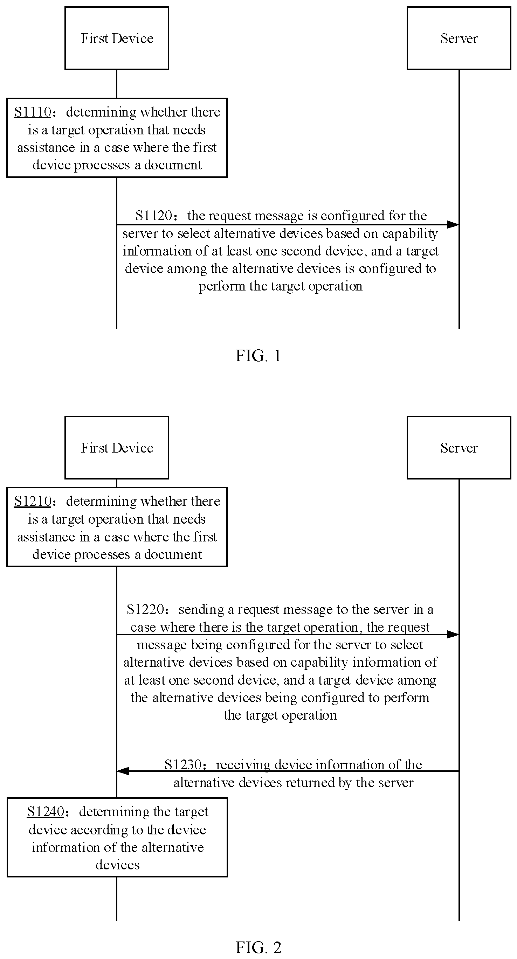

As shown in FIG. 1, an embodiment of the present disclosure provides a method for document processing, which is performed by a first device and includes:
S1110: determining whether there is a target operation that needs assistance in a case where the first device processes a document; and
S1120: sending a request message to a server in a case where there is the target operation, in which the request message is configured for the server to select alternative devices based on capability information of at least one second device, and a target device among the alternative devices is configured to perform the target operation.

For example, the first device here can be any device that is processing the document, and for example, the first device can be various terminal devices which can be a mobile terminal and/or a fixed terminal.

As another example, the first device and the second device may be any device that a user can use. For example, the first device and/or the second device may be a mobile phone, a tablet computer, a wearable device, a vehicle-mounted device, a smart home device and/or a smart office device.

In a case where the first device processes the document, the first device may lack a certain capability or the certain ability is not strong enough, and thus other devices are needed to assist the first device in executing the target operation.

**In** an embodiment of the present disclosure, if the first device needs other devices to assist in processing the document, the first device may send the request message to the server. The server may be a cloud server, a local server in a same local area network as the first device, or a self-server on the first device.

The request message may include operation information of the target operation. The operation information may include an operation type and/or an operation parameter.

The operation parameter includes but is not limited to indicate, at least one of:
operation object information indicating an operation object;
operation indicator information indicating an evaluation indicator that needs to be achieved to perform the target operation. The evaluation indicator can include: resolution of an image, audio definition of audio information, and/or loudness of sound.

For example, for a scene requesting to collect user signatures, the operation information includes a signature collection operation (operation type) and a signature parameter (operation parameter). This signature parameter can be configured to indicate a target device that can collect signatures or facilitates collecting the signatures and a page parameter of a signature page. The page parameter includes but is not limited to a link address of the signature page.

The first device processing the document may include the first device editing the document, the first device displaying the document, or the first device sharing the document.

In some embodiments, the server stores capability information of the second device, and the first device can be assisted by the second device to perform above functions.

For example, an image collection function is performed by the second device, and a collected image is inserted into a document being processed by the first device, etc.

The capability information may indicate software and hardware capabilities of the second device, such as ability to collect high-definition video and/or ability to collect voice.

The server can be an application server or a management server of the software bus. For example, the application server may be a server of an application currently used by the first device to process the document.

For example, the application for document processing includes, but is not limited to, a document editing application. A typical document editing application can include: a WPS application, a word application, a PPT editing application or an excel editing application or a visio editing application.

The above only shows examples of the document editing application, and specific implementation is not limited to the above examples.

If the server is the application server, the second device can use a same application as the first device. The second device includes, but is not limited to, various electronic devices.

For example, because the application server provides application services for the application, it will be known which devices use the application, and software and hardware capabilities of these electronic devices that use the application and/or software and hardware capabilities that are openly shared with other electronic devices will be obtained in advance.

For example, the user has a powerful vehicle-mounted device, which can achieve high-precision positioning, image collection and other functions. If the vehicle-mounted device is also using the application corresponding to the application server and the vehicle-mounted device can be authorized to assist other devices in performing an image collection operation based on a user's instruction, capability information of the image collection capability of the vehicle-mounted device can be recorded in the application server.

For example, the management server can manage a plurality of devices connected on a same software bus. Such management includes, but is not limited to, registration and deregistration of devices connected to the same software bus, storage of capability information of respective devices, selecting and executing the target operation when a certain device requests assistance of other devices, and other operations.

In some embodiments, the capability information may include at least one of:
first capability information indicating whether the second device has a certain capability; and
second capability information indicating a capability parameter of a certain capability of the second device. This capability parameter can be configured to measure quality of an operation result that the second device can provide when performing a corresponding operation. For example, if the second device has the image collection capability, the second indication information may indicate how high a resolution of an image that the second device can collect.

The above only shows examples of the capability information, and specific implementation is not limited to the above examples.

In some embodiments, the alternative devices are any device capable of performing the target operation, and the target device is a device selected from the alternative devices that performs the target operation. The target operation may be a configuration operation pre-defined in the first device, a document operation that the first device is not capable of executing, or a document operation for which the first device cannot achieve an expected effect with its own capability. The above only shows examples of the target operation, and its specific implementation is not limited to the examples.

In an embodiment, the target device is determined by the first device based on device information of the alternative devices provided by the server. **In** another embodiment, the target device can be directly determined by the server.

In some embodiments, the first device determining the target device from the alternative devices by itself may include: selecting the target device from the alternative devices based on a user's selection operation, and/or preferentially selecting an alternative device that has assisted the first device in performing a document processing operation as the target device according to a history selection record of the first device.

In an embodiment, before sending the request message, the method further includes:
determining whether there is first attribute information of the target operation, the first attribute information being configured to indicate one or more target attributes that the target device is required to possess.

The first attribute information can be used to indicate one or more device attributes of the target device expected by the first device; or can indicate attributes of the first device to indirectly determine one or more target modes required by the target device.

The device attributes may include a type of the device, an operation mode of the device, and/or attributes of components within the device that perform a target function.

For example, the target operation is a projection operation which requires projection onto a device with a large screen. The device with a large screen includes a personal computer or a meeting-room computer. The type of the device can indicate that the target device is a personal computer (PC).

For a scene where the target operation involves audio play, if a current alternative device is in a calling state, it may be rejected by a user of the target device that this alternative device is selected as the target device, resulting in unsuccessful assistance of the target operation.

Therefore, based on the operation mode of the device, alternative devices that cannot perform the target operation can be filtered.

For example, the target mode may be an operation mode that the first device expects the target device to be in, for example, in a projection state or in an audio output state.

For example, the first attribute information indicates that the first device itself is currently in a conference mode, which indicates that the first device needs a target device that supports the conference mode.

As another example, the target operation is a screen projection operation, and the first attribute information may also include screen size information and/or screen resolution information.

In an embodiment, the request message includes the first attribute information. The first attribute information is configured for the server to select the target device with the target attribute from the alternative devices, or for the server to select an alternative device according to capability information of at least one second device and second attribute information.

For example, the first device may carry the first attribute information in the request message, so that the server can directly select the alternative device according to at least one of the operation information of the target operation and the capability information required by the target operation in combination with the first attribute information.

The operation information may include an operation identifier and/or operation type information. The capability information indicates capability required to perform the target operation.

If the server only determines an alternative device that can perform the target operation for the first device, an alternative device indicated by the device information returned by the server has attribute indicated by the first attribute information.

If the server directly selects the target device for the first device, the target device indicated by the device information returned by the server to the first device has the attribute indicated by the first attribute information.

In some embodiments, the first attribute information may not be sent to the server, and at this time, the server returns the second attribute information while returning the device information of the alternative device.

In some embodiments, after sending the request message, the method further includes:
receiving second attribute information of the alternative devices; and
selecting the target device with the target attribute from the alternative devices according to the first attribute information and the second attribute information.

At this time, the first device can match its own first attribute information with the second attribute information so that the selected target device has the attribute indicated by the first attribute information.

The first device can directly select the target device from the alternative devices through matching of the first attribute information and the second attribute information in a background, and at this time, the user does not need to manually determine the target device from the alternative devices.

For example, when there are a plurality of alternative devices with the attribute indicated by the first attribute information, an alternative device with strongest capability to perform the target operation can be selected from the plurality of alternative devices as the target device, or an alternative device with a shortest distance from the first device can be selected from the plurality of alternative devices as the target device.

In some embodiments, selecting the target device with the target attribute from the alternative devices according to the first attribute information and the second attribute information includes:
selecting candidate devices including the target device from the alternative devices according to the first attribute information and the second attribute information;
displaying device information of the candidate devices; and
determining the target device from the candidate devices according to a selection operation of device information on the candidate devices.

In the embodiment of the present disclosure, the first device can automatically match the first attribute information with the second attribute information, and select the candidate devices with the attribute indicated by the first attribute information from the alternative devices.

The device information of the candidate devices such as device identifiers and/or device names can be output on a user interface of the first device. For example, the device information of the candidate devices is output in a form of a dialog box or a device information list, which is convenient for users to choose their desired target devices.

Referring to FIG. 2, an embodiment of the present disclosure provides a method for document processing, which is performed by a first device and includes:
S1210: determining whether there is a target operation that needs assistance in a case where the first device processes a document;
S1220: sending a request message to the server in a case where there is the target operation, the request message being configured for the server to select alternative devices based on capability information of at least one second device, and a target device among the alternative devices being configured to perform the target operation;
S1230: receiving device information of the alternative devices returned by the server; and
S1240: determining the target device according to the device information of the alternative devices.

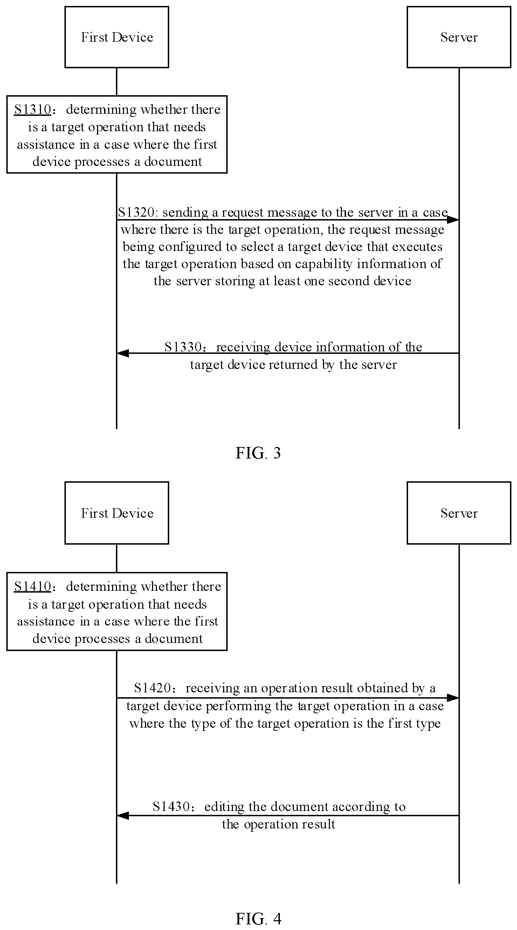

Referring to FIG. 3, an embodiment of the present disclosure provides a method for document processing, which is performed by a first device and includes:
S1310: determining whether there is a target operation that needs assistance in a case where the first device processes a document;
S1320: sending a request message to the server in a case where there is the target operation, the request message being configured to select a target device that executes the target operation based on capability information of the server storing at least one second device; and
S1330: receiving device information of the target device returned by the server.

To sum up, there are many ways for the first device to select the target device from the alternative devices by itself, and its specific implementation is not limited to any of the above.

In an embodiment, when the first device or the server selects the target device, the target device can be selected from the alternative devices according to a selection strategy.

The selection strategy includes but is not limited to at least one of:
a proximity priority strategy;
a belonging priority strategy;
a random strategy, and the like.

For example, the proximity priority strategy may include at least one of:
determining an alternative device with capability to perform the target operation, a shortest distance from the first device, and a first priority as the target device;
determining an alternative device with capability to perform the target operation, a direct connection transmission channel with the first device, and a first priority as the target device; and
determining an alternative device with capability to perform the target operation, no direct connection transmission channel device with the first device, and a second priority as the target device.

The second priority may be lower than the first priority.

If there are multiple alternative devices with a same priority, further selection can be made according to other strategies. For example, random selection is made according to a random strategy, or selection is made among the alternative devices with the same priority according to belonging priorities.

For example, if there are a plurality of alternative devices with the capability to perform the target operation, the shortest distance from the first device, and the first priority, an alternative device belonging to a same user account can be preferentially selected as the target device according to the belonging priority strategy.

For example, the belonging priority strategy may include at least one of:
determining an alternative device with the capability to perform the target operation, belonging to a same user account as the first device, and with the first priority as the target device;
determining an alternative device with the capability to perform the target operation, belonging a relative-friend account to the user account of the first device, and with the second priority as the target device, the relative-friend account being a friend account and/or a relative account to the user account of the first device; and
determining an alternative device with the capability to perform the target operation, belonging to a strange account to the user account of the first device, and with a third priority as the target device.

The first priority is higher than the second priority, and the second priority is higher than the third priority.

In an embodiment, an alternative device with the capability to perform the target operation and belonging to the same user account as the first device can be determined as the target device.

In another embodiment, if an alternative device belongs to a relative-friend account of the first device and does not have operation capability to perform the target operation, another alternative device with the capability to perform the target operation and belonging to the relative-friend account of the first device is determined as the target device.

In an embodiment, if alternative devices with the capability to perform the target operation are all devices belonging to strange accounts to the user account of the first device, an alternative device with the capability to perform the target operation and belonging to the strange account can be determined as the target device.

The strange account here is a device authorized to assist the first device in performing the target operation.

In some embodiments, the type of the target operation includes:
a first type configured to provide input information for document processing;
   and/or,
a second type configured to output document information.

For example, the first type is configured to provide input information for document processing.

For example, depending on whether the target operation is to introduce information to document editing or to directly output the document, the target operation of the document can be divided into the first type and the second type.

For example, the first type may be to obtain the input information required for document editing.

In an embodiment, part or all of the input information can be used to be written into the document as part of content of the document. In another embodiment, the input information may be authentication information or the like used during document editing.

When the target operation is of the first type, the second device can obtain the input information for document editing by performing the target operation.

When the target operation is of the second type, the second device outputs the document by performing the target operation by means of projection, display of a display screen, voice output, printing, or the like.

In this way, regardless of whether the first device has input capability or output capability, by communicating with other devices (including communicating directly, or indirectly through the server), other devices that assist the first device in processing the document can be known, thus achieving better document editing.

As shown in FIG. 4, an embodiment of the present disclosure provides a method for document processing, which is performed by a first device and includes:
S1410: determining whether there is a target operation that needs assistance in a case where the first device processes a document;
S1420: receiving an operation result obtained by a target device performing the target operation in a case where the type of the target operation is the first type; and
S1430: editing the document according to the operation result.

For example, after receiving the operation result, the first device edits the document by itself according to the operation result.

The operation result can be directly sent by the target device to the first device through the direct connection transmission channel, or can be forwarded by the server to the first device.

For example, if the target operation is the image collection operation, the operation result includes an image collected by the target device. At this time, the editing the document according to the operation result may include inserting the image at a position where a cursor for document editing is located when the first device sends the request message, at an end of the document, at a current cursor position, or at a designated position.

For example, the inserting the image at the position where the cursor for document editing is located when the first device sends the request message, at an end of the document, at a current cursor position, or at a designated position may include:
displaying a picture insertion prompt on a display interface of the document, and detecting a user operation acting on the insertion prompt; inserting the image at the position where the cursor for document editing is located when the first device sends the request message, when the user operation indicates that insertion is determined; or determining an insertion position according to the user operation, and automatically inserting the image according to the determined insertion position; or directly inserting the image at the current cursor position in the document or at the end of the document according to the user operation.

In this way, the user does not need to find a storage directory of the image and insert into the document through a document editing function, which simplifies user's operations and improves the document editing function of the first device.

For example, if the image is a signature image, the designated location can be at a signature of the file.

If the insertion is made at the position where the cursor for document editing is located when the first device sends the request message, the first device needs to synchronously record the position where the cursor for document editing is located when the first device sends the request message when sending the request message.

Similarly, the image insertion method can also be applied to insertion of a link. The link includes, but is not limited to, an image link and/or a file link. The file link include, but is not limited to, a link to an image file and/or a link to an audio file.

In some embodiments, the receiving the operation result obtained by the target device performing the target operation includes:
receiving the operation result sent by the target device based on a direct connection transmission channel in a case where the direct connection transmission channel is established between the target device and the first device;
   or,
receiving the operation result sent by the target device and returned by the server in a case where the direct connection transmission channel is not established between the target device and the first device.

The direct connection transmission channel here includes, but is not limited to, a Bluetooth transmission channel, a WiFi direct connection transmission channel and/or a sidelink (SL) transmission channel, and/or an infrared direct connection transmission channels.

If there is the direct connection transmission channel between the target device and the first device, in order to reduce unnecessary transmission delay and network congestion, the operation result sent by the target device can be directly received based on the direct connection transmission channel.

If the direct connection transmission channel is not established between the target device and the first device, the first device can receive the operation result from the server.

In this way, no matter whether the direct connection transmission channel is established between the first device and the target device or not, assistance by the target device can be obtained, thus realizing better and more convenient editing of the document.

In some embodiments, the operation result includes:
image information captured by the target device;
electronic signature information collected by the target device;
biometric information collected by the target device; and
audio information collected by the target device.

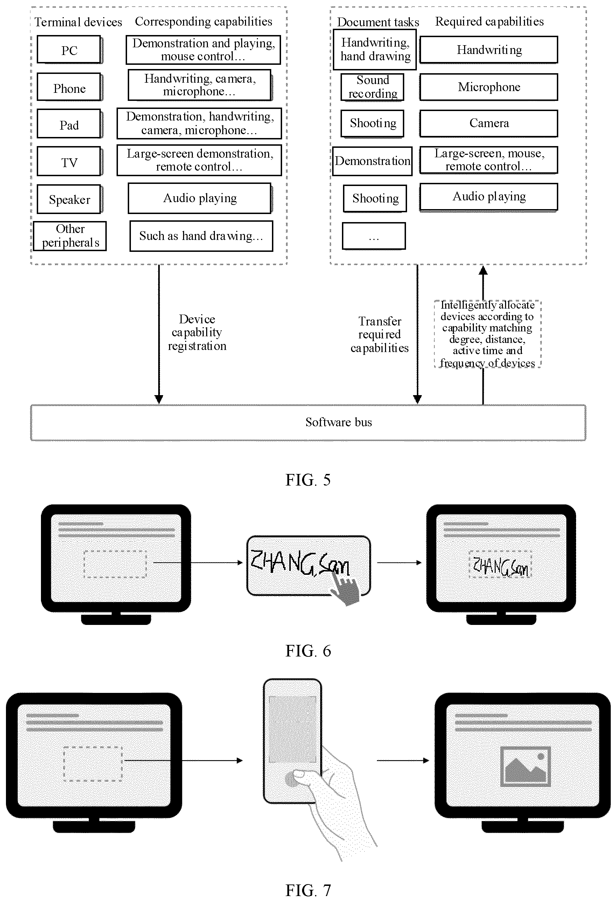

For example, when editing the document with the first device such as a desktop computer or a notebook computer, it is necessary to collect images. However, although the desktop computer or notebook computer has the capability to collect the images, but with poor image quality, and thus other devices can be used to perform the image collection function. FIG. 7 is a schematic diagram of a PC requesting a mobile phone for assistance in image collection. After the operation information of the target operation can be directly sent to the mobile phone by the first device or forwarded to the mobile phone through the server, the mobile phone performs the image collection and returns a collected image to the PC, and the PC automatically inserts corresponding characters of the document after receiving the collected image.

For example, a first device without input hardware for the user to sign by hand such as a smart watch, a smart bracelet and others with a small screen or a desktop computer, etc., can capture signature information of the user with aid of capturing of the second device. For example, the mobile phone may have a fingerprint collection module, but the notebook computer or the smart watch does not have capability to collect fingerprints. At this time, if the notebook computer is editing the document, it can request the mobile phone to collect user's fingerprint. The fingerprint here is only an example of biometric information, and a specific implementation of this biometric information can also include other biometric information such as iris information.

As another example, as shown in FIG. 6, the PC needs the user's signature in a process of document editing or the like. At this time, it can also request a device such as a mobile phone or a tablet that can collect a user's touch operation, receive the signature information, and automatically insert the signature information at a corresponding position of the document.

As another example, in editing the document, audio information or a link to the audio information needs to be inserted. However, the first device does not have capability to collect audio information or a poor collection effect of audio information, or it is not next to a secondary collection object that collects the audio information. At this time, the first device can pass the audio information of the target device.

For example, when the first device needs to specify a collection target, location information of a specified location can be written in the request message, so as to facilitate the application server to select the target device according to the location information.

The above only shows examples of characteristics of the target device, and its specific implementation is not limited to the above examples.

In some embodiments, the editing the document according to the operation result includes at least one of:
inserting the image information into the document;
inserting the audio information into the document;
inserting a link address of the audio information into the document;
inserting text information corresponding to the audio information into the document; and
inserting the electronic signature information into the document.

In some embodiments, in response to an editing operation on the document by an input module of the first device, it is necessary to verify that the first device has editing permission according to the biometric information.

In an embodiment of the present disclosure, if the target operation is a first type operation, an operation result containing the input information can be obtained, and the first device receives the input information provided by the target device to be directly inserted in the document.

For example, the image information, the audio information, the link address of the audio information, the text information translated from the audio information, and the electronic signature information are directly inserted into the document.

In some embodiments, the biometric information may include fingerprint information, iris information and other biometric information indicating identity verification, and be inserted into a document requiring a biometric feature to indicate identity such as a contract.

In other embodiments, the biometric information may also indicate verification on whether the first device has editing rights.

For example, the first device downloads the document from the application server, but verification for the editing rights is needed for document editing, and this verification requires high-classification verification, but the notebook computer or the desktop computer may not be able to collect fingerprints or irises, and at this time, it can perform collection by means of a device such as the mobile phone. After the verification is passed, a central processor or application server of the first device can respond to editing of the document by the input module of the first device.

The input module includes, but is not limited to, a physical keyboard, a virtual keyboard, a handwriting pad, or a touch panel.

The above only shows examples of the input module, and its specific implementation is not limited to the above examples.

In an embodiment, the method further includes:
interacting information related to performing of the target operation with the target device based on the direct connection transmission channel in a case where the direct connection transmission channel is established between the target device and the first device;
   or,
interacting information required for performing the target operation with the target device through the server in a case where the direct connection transmission channel is not established between the target device and the first device.

Since the first device needs the target device that performs the target operation, information related to the target operation needs to be interacted between the first device and the target device.

In an embodiment of the present disclosure, regardless of whether the target operation is of the first type or the second type, if the direct connection transmission channel is established between the first device and the target device, in order to improve the response efficiency, information interaction is performed between the first device and the target device through the direct connection transmission channel. If the direct connection transmission channel is not established between the first device and the target device, information interacted between the first device and the target device is transferred and/or transmitted through the server.

In some embodiments, the method further includes:
sending the document information to the target device in a case where the type of the target operation is the second type.

When the type of the target operation is the second type, the first device can send the document information to the target device through the direct connection transmission channel and/or the Internet.

The document information can be used for the target device to perform at least one of the following.

The document information can be used to indicate display, printing, editing, projection or screen projection of the target device.

The document information may include but is not limited to at least one of:
document content;
attribute information of the document, for example, a document identifier and/or document attribute information. The document attribute information may include, but is not limited to, at least one of: document type information, hyperlink information of the document, data amount information of the document, editor information of the document, modifier information of the document and/or authorization information of the document.

The document content sent to the target device can be a part of the document content or the whole document content.

To sum up, specific content of the document information depends on a specific implementation, and is not limited herein.

In some embodiments, the sending the document information to the target device includes:
sending the document to the server in a case where the direct connection transmission channel is not established between the target device and the first device. The document is forwarded to the target device by the server.

If the direct connection transmission channel is not established between the target device and the first device, the document information is sent to the server, and the document information can be forwarded to the target device by the server.

If the server has stored the document content, the first device can only send a document identifier of the document to the server. The document identifier can be carried in the request message or in additionally sent indication information indicating the document.

In this way, even if there is the direct connection transmission channel between the first device and the target device, discovery of the target device can be realized by means of the application server and performing of the target operation can be realized by the target device.

In some embodiments, the sending the document information to the target device includes:
receiving the device information of the target device returned by the server in a case where the direct connection transmission channel is established between the target device and the first device; and
sending the document information to the target device through the direct connection transmission channel according to the device information.

If the server finds that the direct connection transmission channel is established between the determined target device and the first device, it can return the device information of the target device to the first device, so that the first device can receive the device information sent by the server. The device information may include, but is not limited to, at least one of: a device identifier and/or a user account of the target device.

The device identifier may be an international mobile equipment identity (IMEI), an Internet Protocol (IP) address, an MAC address of the target device and/or a channel identifier of the direct connection transmission channel established between the first device and the target device.

The user account can be an account of an application at which the target device uses application service provided by the server.

To sum up, after receiving the device information, the first device can determine the target device that can perform the target operation according to the device information, and request the target device to perform the operation.

In some embodiments, the method further includes:
determining that the direct connection transmission channel is established between the target device and the first device in a case where the target device and the first device are connected to a same distributed software bus,
determining that the direct connection transmission connection is established between the target device and the first device in a case where a Bluetooth connection is established between the target device and the first device;
determining that the direct connection transmission connection is established between the target device and the first device in a case where a WiFi direct connection is established between the target device and the first device; and
determining that the direct connection transmission connection is established between the target device and the first device in a case where an SL link is established between the target device and the first device.

For example, the software bus herein can be called a distributed software bus. The distributed software bus can perform several main functions: discovery, connection, networking/topology management, task bus, and/or data bus.

FIG. 6 is a schematic diagram of a plurality of devices connected to a same software bus. For example, various terminal devices include, but are not limited to, a Personal Computer (PC), a mobile Phone (Phone), a tablet computer (for example, Pad), a Television (TV), a speaker or other peripherals, and the like. Meanwhile, the server may also store capability information of respective terminal devices.

Any of the devices produces a corresponding document task in processing a document. The document task can be completed by one or more document operations. The target operation described above may be one or more of the document operations above.

When a terminal device is registered with the software bus, it can register its own device capability to a management server through the capability information. In subsequently assisting other devices in performing document tasks, the target device can be selected according to device capability matching degree, active time and frequency.

The discovery function refers to a function of searching surrounding devices. The connection function refers to a function of establishing a connection with a discovered device. The networking/topology management function refers to a function of performing network topology management for all of discovered devices. For example, a plurality of discovered devices are combined into a star network topology or a Mesh network topology. The task bus function refers to a path used to transmit small amount of data information on a basis of an established network topology. The data bus function refers to a path used to transmit large amount of data information.

The first device and the second devices are connected to the same software bus, which indicates that there is a direct connection transmission channel between the first device and any of the second devices connected to the same software bus.

When other devices around are discovered, one or more communication technologies such as Bluetooth communication technology, infrared communication technology and/or WiFi direct communication technology can be used to establish point-to-point direct connection transmission. If two devices are connected on a same software bus, it indicates that there is a direct connection transmission channel between the two devices.

In some embodiments, the method further includes:
receiving device information of the alternative devices returned by the server; the alternative devices being second devices capable of performing the target operation;
detecting a selection operation of the device information on the alternative devices; and
determining the target device according to the selection operation.

If the target device is determined by the first device by itself, the first device can receive the device information of the alternative devices from the server. In an embodiment of the present disclosure, the device information of the alternative devices is output, for example, output in a displaying manner or output in a voice manner, for the user to select. The first device can simply determine the target device from the alternative devices according to a user's choice.

Further, if there is the direct connection transmission channel between the target device and the first device, the first device can directly request the target device to perform the target operation after determining the target device. At this time, the first device may or may not inform the target device determined by itself.

If there is no direct connection transmission channel between the target device and the first device, after the first device determines the target device, the method further includes:
returning the device information of the target device to the server, so that the server knows the target device determined by the first device itself and assists the first device to request the target device to perform the target operation.

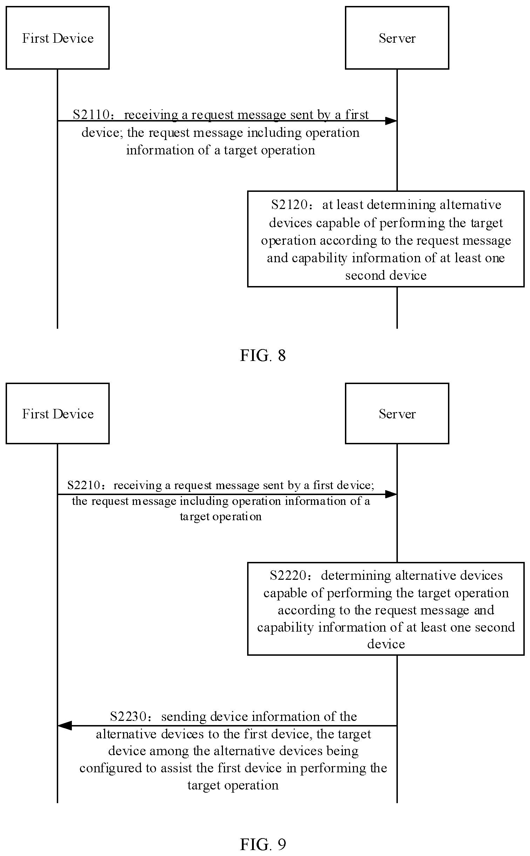

As shown in FIG. 8, an embodiment of the present disclosure provides a method for document processing, which is performed by a server, and the method includes:
S2110: receiving a request message sent by a first device; the request message including operation information of a target operation; and
S2120: at least determining alternative devices capable of performing the target operation according to the request message and capability information of at least one second device, the target device among the alternative devices being configured to assist the first device in performing the target operation.

The server can be a management server of a software bus or an application server of an application. The application includes, but is not limited to, a document editing application, etc.

The server can be a cloud server deployed in the cloud or a local server in a same local area network as the first device.

The server can be connected with the first device through a local area network and/or the Internet. The first device can be any terminal device capable of processing documents.

After the request message is received, it can be parsed. For example, the request message may include at least one of:
operation information and/or an operation parameter of the target operation. The operation information may indicate the target operation. The operation parameter may include an evaluation parameter, etc.

For example, the operation parameter includes but is not limited to instructing at least one of the following:
operation object information instructing an operation object; and
operation indicator information indicating an evaluation indicator that needs to be achieved to perform the target operation. The evaluation indicator can include: resolution of an image, audio definition of audio information, and/or loudness of sound.

In other embodiments, the request message may also include capability requirement information of performing capability required by the target operation, etc.

In still other embodiments, the request message may also include location information of the first device, etc.

The server is stored with the capability information of the second devices in advance.

The capability information may indicate software and hardware capabilities of the second device. For example, the software and hardware capabilities can be ability to collect high-definition video and/or ability to collect voice.

For example, the second devices may submit their own capability information when registered with the server, or the second devices may submit their own capability information when logging in to an application at which the server provides application service.

To sum up, the request message can include any information that can help the server determine the alternative device that can perform the target operation.

In an embodiment of the present disclosure, second devices capable of performing the target operation are determined as the alternative devices. The target device is finally determined to perform the target operation requested by the first device.

In an embodiment of the present disclosure, the server may at least determine the alternative devices. Subsequent further determination of the target device may be performed by the server or by the first device itself, which is not limited herein.

In this way, the server can assist the first device in selecting the target device that can perform the target operation, and the target device can assist the first device in performing document processing, thus improving document processing efficiency and document processing capability of the first device.

In some embodiments, the type of the target operation includes:
a first type configured to provide input information for document processing;
   and/or,
a second type configured to output document information.

For example, depending on whether the target operation is to introduce information to document editing or to directly output the document, the target operation of the document can be divided into the first type and the second type.

For example, the first type may be to obtain the input information required for document editing.

In an embodiment, part or all of the input information can be used to be written into the document as part of content of the document. **In** another embodiment, the input information may be authentication information or the like used during document editing.

When the target operation is of the first type, the second device can obtain the input information for document editing by performing the target operation.

When the target operation is of the second type, the second device outputs the document by performing the target operation by means of projection, display of a display screen, voice output, printing, or the like.

In this way, regardless of whether the first device has input capability or output capability, by communicating with other devices (including communicating directly, or indirectly through the server), other devices that assist the first device in processing the document can be known, thus achieving better document editing.

In some embodiments, the method further includes:
determining whether the direct connection transmission channel is established between the target device and the first device in a case where the type of the target operation is the first type;
sending first indication information to the target device according to the request message in a case where the direct connection transmission channel is established between the target device and the first device, the first indication information being configured to instruct the target device to perform the target operation based on the direct connection transmission channel; and
sending second indication information to the target device according to the request message in a case where the direct connection transmission channel is not established between the target device and the first device, the second indication information being configured to instruct the target device to perform the target operation and return the operation result of the target operation to the server, and the operation result being sent to the first device by the server.

After the target device is determined, the server can determine how to instruct the target device to perform the target operation according to a type of the target operation and whether the direct connection transmission channel is established between the first device and the target device.

The direct connection transmission channel herein may include at least one of:
the first device and the target device being connected to the same software bus;
a Bluetooth connection being established between the first device and the target device;
an infrared connection being established between the first device and the target device;
a WiFi direct connection being established between the first device and the target device; and
an SL link being established between the first device and the target device.

Through above schemes, regardless of whether the direct connection transmission channel is established between the first device and the target device, the target device that assists the first device in processing the document can be quickly found, and further document processing can be performed in combination with the target operation of the target device.

In some embodiments, the method further includes:
determining third devices to which the first device has been connected or is connectable in a case where there is the target operation;
displaying device information of the third devices; and
sending the request message to the server in a case where there is the target operation, including:
   sending the request message to the server in a case where a device information selection operation for the third devices is not detected.

The first device has been currently connected or has discovered one or more third devices. At this time, the third device can also be used as the target device to assist the first device in performing the target operation. In this case, there is no need to additionally request a message from the server.

Therefore, in an embodiment of the present disclosure, only if the first device itself does not find the target device that can perform the target operation, the first device requests from the server, thus reducing unnecessary information interaction between the first device and the server.

In some embodiments, the method further includes:
selecting the target device that performs the target operation from the third device in a case where a second device information selection operation acting on the third devices is detected.

If it is detected that the third device can be performed, the first device displays the device information of the third devices to facilitate the user to select the target device.

In an embodiment, the request message further includes: first attribute information.

The step S2120 may include:
selecting the alternative device or the target device with the attribute indicated by the first attribute information according to the operation information and/or the first attribute information of the target operation carried by the request message.

In another embodiment, the method further includes:
also returning the second attribute information to the first device when the device information of the alternative device is returned to the first device. The second attribute information is used for the first device to select the target device with the attribute indicated by the first attribute information in combination with the first attribute information.

As shown in FIG. 9, an embodiment of the present disclosure provides a method for document processing, which is performed by a server, and the method includes:
S2210: receiving a request message sent by a first device; the request message including operation information of a target operation; and
S2220: determining alternative devices capable of performing the target operation according to the request message and capability information of at least one second device; and
S2230: sending device information of the alternative devices to the first device. The target device among the alternative devices is configured to assist the first device in performing the target operation.

In an embodiment, the method further includes:
returning device information of the target device to the first device;
   or,
returning the device information of the alternative devices to the first device, the device information of the alternative devices being configured for the first device to select the target device.

If the server directly selects the target device from the alternative devices, it can return the device information of the target device to the first device.

Or, the server only selects the alternative devices for the first device and returns the device information of the alternative devices to the first device. In this way, it is convenient for the first device to select the target device by itself according to the device information of the alternative devices.

In some embodiments, the method further includes receiving the device information of the target device returned by the first device based on the device information.

In other embodiments, after the first device determines the target device from the alternative devices, it is unnecessary to inform the server.

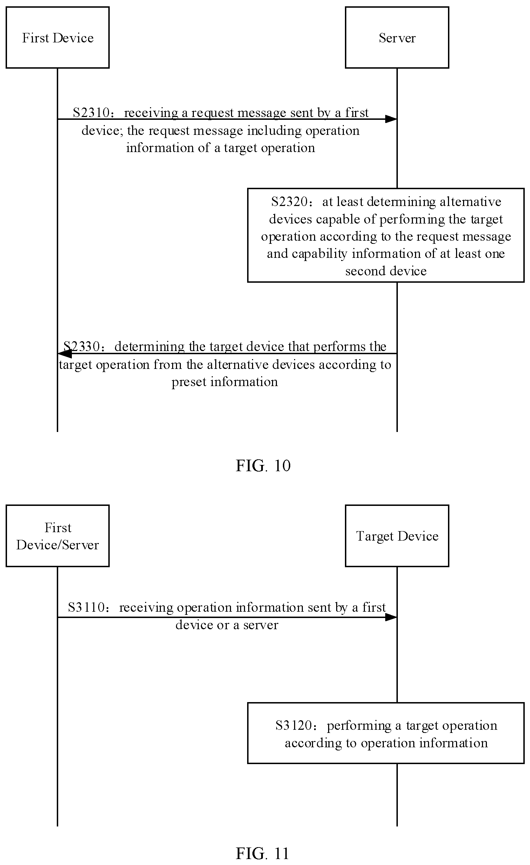

As shown in FIG. 10, an embodiment of the present disclosure provides a method for document processing, which is performed by a server, and the method includes:
S2310: receiving a request message sent by a first device; the request message including operation information of a target operation; and
S2320: at least determining alternative devices capable of performing the target operation according to the request message and capability information of at least one second device, the target device among the alternative devices being configured to assist the first device in performing the target operation; and
S2330: determining the target device that performs the target operation from the alternative devices according to preset information.

The alternative devices capable of performing the target operation are determined according to the request message and the capability information of at least one second device, and the target device that performs the target operation is determined according to the preset information.

The preset information is information that can be further configured to select the target device from the second devices in addition to the request message and the capability information.

The preset information may include at least one of:
state information of the second devices, which for example can indicate at least one of: network connection states of the second devices, a type of a network to which the second devices are connected, load rates of the second devices, whether the second devices are running a target application, and/or health states of the second devices;
belonging information of the second devices, for example, a user account bound to the second device, or a relative-friend account to the user account bound to the second device;
location information of the second devices, which for example may include, but is not limited to, latitude and longitude information of the second devices, etc.; and
matching degree information between capabilities provided by the second devices and capabilities required to perform the target operation.

The above only shows examples of the preset information, and its specific implementation is not limited to the above examples.

No matter which preset information is used, the target device is selected from the alternative devices.

In an embodiment, the method further includes:
determining the target device that performs the target operation from the alternative devices according to the preset information.

The server can determine within a predetermined range whether there is a second device that has all of required capabilities for the target operation.

In some embodiments, the capability information may indicate device capabilities of respective second devices, and matching can be performed according to the capabilities required by the target operation so as to get the aforementioned matching degree information.

If there is a case that the matching degree information indicates 100% matching, a second device with the 100% matching is preferred as the target device, that is, the second device with the 100% matching is determined as the target device. If the alternative devices exist, the target device is determined from the alternative devices, otherwise, a second device with a highest matching degree is selected as the target device according to the matching degree information.

The predetermined range may include, but is not limited to, at least one of:
a device bound to a same user account as the first device;
a device within a preset range from the first device;
a device belonging to a same local area network as the first device;
a device connected to a same software bus as the first device; and
a device belonging to a relative-friend account to the user account bound to the first device.

The above shows examples of the predetermined range, and its specific implementation is not limited to the above examples.

In some embodiments, the determining the target device that performs the target operation from the alternative devices according to the preset information includes:
selecting the target device from the alternative devices that can perform the target operation according to the preset information and a first type of selection strategy in a case where there are a plurality of alternative devices;
   or,
sending device information of the alternative devices to the first device according to the preset information and a second type of selection strategy in a case where there are a plurality of alternative devices, in which the device information of the alternative devices is configured for the first device to select the target device.

The first type of selection strategy is a selection strategy in which the server selects the target device from the alternative devices.

The second type of selection strategy is a selection strategy in which the first device selects the target device from the alternative devices.

Target objects selected according to the two selection strategies are different, which is convenient to meet different target device selection requirements in different scenarios.

If there are a plurality of second devices that can completely operate according to a target requested by the request message, it is necessary to further select the target device from the plurality of second devices that can perform the target operation according to the preset information and a target selection strategy used.

Thus, the second devices selected in this way may not only select the target device capable of performing the target operation, but also select a most suitable target device according to requirements for selecting the target device.

In some embodiments, the selecting the target device from the second devices capable of performing the target operation according to the preset information and the first type of selection strategy includes at least one of:
selecting an alternative device with a shortest distance from the first device as the target device according to the preset information and a distance shortest strategy;
selecting a second device which can perform the target operation and whose active condition meets preset conditions as the target device according to the preset information and a distance shortest strategy; and
selecting a second device which can perform the target operation and has a direct connection transmission channel with the first device as the target device according to the preset information and a direct connection transmission channel priority strategy.

The shortest-distance strategy, the active condition priority strategy and the direct connection transmission channel priority strategy are all concrete examples of the first type of selection strategy described above, and its specific implementation is not limited to the above examples.

In some embodiments, the method further includes:
selecting the first type of selection strategy from a plurality of alternative selection strategies according to the target operation.

For example, if the target operation is an on-site signature operation, the shortest-distance strategy can be selected as the first type of selection strategy. For example, if the target operation is a print operation, the direct connection transmission channel priority strategy can be selected as the target selection strategy.

As another example, if it is a case that does not conform to selecting the shortest-distance strategy and/or the direct connection transmission channel priority strategy, the active condition priority strategy can be determined as the first type of selection strategy.

The above only shows specific examples of determining the first type of strategy, and its specific implementation is not limited to the above examples.

In some embodiments, the selecting the second device which can perform the target operation and whose active condition meets the preset conditions as the target device according to the preset information and the active condition priority strategy includes one of:
selecting a second device which can perform the target operation and with a highest active frequency as the target device according to the preset information and the active condition priority strategy;
selecting a second device which can perform the target operation and is currently active as the target device according to the preset information and the active condition priority strategy; and
selecting a second device which can perform the target operation and is active at last as the target device according to the preset information and the active condition priority strategy.

The active condition may be an active condition in which the second device uses the software bus and/or an active condition in which the second device uses the target application.

The target application may be an application for the first device to process the document, or an application executed by the first device based on the user operation.

If the active condition is an active condition of using the target application, the selecting the second device which can perform the target operation and whose active condition meets the preset conditions as the target device according to the preset information and the active condition priority strategy includes one of:
selecting a second device which can perform the target operation and uses the target application with a highest frequency as the target device according to the preset information and the active condition priority strategy;
selecting a second device which can perform the target operation and is currently using the target application as the target device according to the preset information and the active condition priority strategy; and
selecting a second device which can perform the target operation and uses the target application at last as the target device according to the preset information and the active condition priority strategy.

If the active condition is an active condition of using the software bus, the selecting the second device which can perform the target operation and whose active condition meets the preset conditions as the target device according to the preset information and the active condition priority strategy includes one of:
selecting a second device which can perform the target operation and uses the software bus with a highest frequency as the target device according to the preset information and the active condition priority strategy;
selecting a second device which can perform the target operation and is currently using the software bus as the target device according to the preset information and the active condition priority strategy; and
selecting a second device which can perform the target operation and uses the software bus at last as the target device according to the preset information and the active condition priority strategy; and
For example, if there is no second device currently active, a last active second device is selected as the target device.

To sum up, selecting the target device according to the active condition priority strategy can reduce selection of the inactive second device as the target device, which can reduce delay in performing the target operation.

As shown in FIG. 11, an embodiment of the present disclosure provides a method for document processing, which is performed by a target device, and the method includes:
S3110: receiving operation information sent by a first device or a server; and
S3120: performing a target operation according to operation information.

For example, the type of target operation includes: a first type configured to provide the input information for editing and other document processing; and/or a second type configured to output document information.

If the type of the target operation is the first type, the method further includes providing the operation result of the target operation to the first device. For example, the operation result of the target operation is sent to the first device through the direct connection transmission channel; or, the operation result is sent to the server, and the server sends the operation result to the first device.

In other embodiments, if the type of the target operation is the second type, the method further includes:
receiving a document provided by the first device or the server; and
outputting the document. Here, the outputting the document may include, but is not limited to, displaying, printing, editing, projecting or screening projecting the document.

In a process of editing the document, there are often operations that are inconvenient for device to perform. For example, in editing the document with a keyboard and a mouse of a Personal Computer (PC), it is necessary to insert a handwritten signature. The user can only do this by externally connecting a handwriting device, handwriting with the mouse, or reopening the document on a mobile phone to complete a handwriting process and then sending it back to the PC, which is either with poor effect or a cumbersome process. Similarly, if the user needs to temporarily insert a taken picture when editing a document on a PC, but it is inconvenient for the PC to take a picture, it is usually necessary to send a picture to the PC after the mobile phone takes the picture and then complete insertion, which is cumbersome.

To sum up, in most current scenarios, if a current device lacks a certain capability, it is necessary to send a task to another device and then send it back to an original device after completion, or externally connect another device for assistance.

When an electronic device processes a document task, the server can automatically allocate recently active devices nearby according to capabilities required by this task. For example, the server can also support to select a device manually to complete the document task according to capability matching degree, distance, active time and frequency. To assist in completing a corresponding task, a task result is directly displayed on the original device, and there is no need to send it back and forth or make additional connections, thus simplifying operation steps.

In this process, convenience and mobility of audio and video input of mobile devices, as well as better demonstration experience and playing effect of large-screen devices such as the PC, are utilized to manage related capabilities of different devices in a unified way. When any of these device initiates a task, these devices can be called intelligently according to capabilities and effect required by the task, thus improving document editing effect, processing efficiency and experience.

Capabilities required in the document processing scenario are fed back to the server of the software bus. When a new electronic device is registered on the software bus, capabilities of the device are recorded in the server of the software bus accordingly. For example, advantages of electronic devices such as a mobile device lie in the convenience and mobility of input of audio, video and the like; and advantages of large-screen devices such as PC lies in their better demonstration experience and play effect.

When an electronic device is processing a document task, nearby recently active devices are automatically allocated to assist in completing a corresponding task according to capabilities required for this task, or manually selected to complete the document task. The server or the electronic device can select the target device according to the capability matching degree, distance, active time and frequency.

When a device that assists in completing the task is disconnected due to abnormal conditions and cannot complete the task, other qualified devices can automatically replace the device.

If an electronic device is connected with peripherals and has corresponding capabilities, is the capabilities are also recorded in the software bus and supports calling.

Capabilities required in the document processing scenario are fed back to the server of the software bus. When a new electronic device is registered on the software bus, capabilities of the device are recorded in the server of the software bus accordingly. For example, advantages of electronic devices such as a mobile device lie in the convenience and mobility of input of audio, video and the like; and advantages of large-screen devices such as PC lies in their better demonstration experience and play effect.

When processing a document task, nearby recently active devices are automatically allocated to assist in completing a corresponding task according to capabilities required for this task, or manually selected to complete the document task. The server or the electronic device can select the target device according to the capability matching degree, distance, active time and frequency.

When a device that assists in completing the task is disconnected due to abnormal conditions and cannot complete the task, other qualified devices can automatically replace the device. After the device is logged with an account, basic information of the device can be recorded on the software bus, and at the same time capability information of the device can be entered, which can indicate at least one of: capabilities indicating peripherals connected to the electronic device, such as a keyboard, a mouse and/or a speaker. Devices recorded in the software bus can be called intelligently according to scenarios.

For example, the PC calls capabilities such as handwriting, photographing and/or voice of a mobile terminal to assist in editing the document.

Referring to FIG. 6, illustration is made in the following by taking the PC calling the handwriting capability of the mobile terminal as an example.

In a process of editing a document, it is necessary to temporarily insert a handwritten signature or hand-draw a complex picture to mark the document, but it is with poor effect to use a mouse/a touchpad to complete a handwriting operation.

When the user triggers a handwriting-related function, a handwriting capability of the user's mobile phone is automatically called, and a current signature interface or a hand-drawn picture to be added is presented on the mobile phone.

After editing, the user clicks OK on the mobile phone, and the signature/hand-drawn picture is directly inserted at a position of an original document on the PC.

Referring to FIG. 7, illustration is made in the following by taking the PC calling a camera of the mobile terminal as an example.

In inserting a picture or video into a document, it needs to be shot temporarily. When relevant functions are triggered, a camera of the user's mobile phone is automatically called. After shooting, the user clicks OK on the mobile phone, and the photo/video is automatically inserted at a position of an original document on the PC.

Illustration is made in the following by taking the PC calling a microphone of the mobile terminal as an example.

In a process of document editing, it is more efficient to use word recognition from speech input, but a microphone of the PC is not good in effect with a limited location. A user can call the microphone of mobile phone and recognize words when speech input is performed, and input words are directly displayed on the PC.

When a capability is called, the devices are automatically allocated according to the capability matching degree, distance, active time and frequency or manually selected to complete the document task.

If capabilities of a mobile phone A and a mobile phone B meet requirements of camera calling at the same time, but the mobile phone A is closer and has abundant power, the mobile phone A can be preferentially used according to determination by the software bus. Users can also manually select the mobile phone B to shoot according to their wishes.

When the mobile phone B runs out of power or other scenarios causing the capability to be unable to be called any more, the software bus can also automatically allocate the mobile phone A to complete the task.

Illustration is made in the following by taking the mobile terminal calling a PC, a large screen and other peripherals for operation as an example.

When viewing documents, videos and other contents on the mobile phone, users can automatically switch to a large-screen device for playback because of a small screen and poor display effect.

When audio is involved, peripherals registered to the software bus also can be called, such as a speaker. The playback here can only be a screen projection, instead of sending a file to the large-screen device. In another embodiment, the document can also be sent to the large-screen device, and is displayed by the large-screen device.

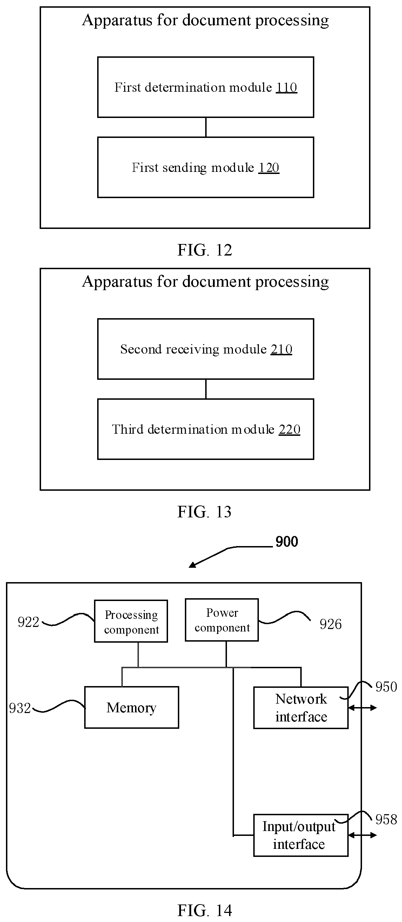

As shown in FIG. 12, an embodiment of the present disclosure provides an apparatus for document processing, which includes:
a first determination module 110 configured to determine whether there is a target operation that needs assistance in a case where a first device processes a document; and
a first sending module 120 configured to send a request message to a server in a case where there is the target operation, the request message being configured for the server to select alternative devices based on capability information of at least one second device, and a target device among the alternative devices being configured to perform the target operation.

The apparatus for file processing may be included in the first device.

In some embodiments, the first determination module 110 and the first sending module 120 may be program modules. After the program modules are executed by a processor, the above operations can be implemented.

In other embodiments, the first determination module 110 and the first sending module 120 may be a software and hardware combined module. Software and hardware combination includes but is not limited to a programmable array. The programmable array includes, but is not limited to, a field programmable array and/or a complex programmable array.

In some embodiments, the first determination module 110 and the first sending module 120 may be a totally hardware module which includes but is not limited to a dedicated integrated circuit.

In some embodiments, the apparatus further includes:
a determination module configured to determine whether there is first attribute information of the target operation, the first attribute information being configured to indicate one or more target attributes that the target device is required to possess.

In some embodiments, the request message includes the first attribute information. The first attribute information is configured for the server to select the target device with the target attribute from the alternative devices, or for the server to select an alternative device according to capability information of at least one second device and second attribute information.

In some embodiments, the apparatus further includes:
a first receiving module configured to receive second attribute information of the alternative devices; and
a first selection module configured to select the target device with the target attribute from the alternative devices according to the first attribute information and the second attribute information.

In some embodiments, the first selection module is particularly configured to select candidate devices including the target device from the alternative devices according to the first attribute information and the second attribute information;
the apparatus further includes a display module configured to display device information of the candidate devices; and
the first selection module is further particularly configured to determine the target device from the candidate devices according to a selection operation of device information on the candidate devices.

In some embodiments, a type of the target operation includes:
a first type configured to provide input information for document processing, for example, to provide input information for document processing; and/or
a second type configured to output document information.

In some embodiments, the apparatus further includes:
a first receiving module configured to receive an operation result obtained by a target device performing the target operation in a case where the type of the target operation is the first type; and
an editing module configured to edit the document according to the operation result.

In some embodiments, the first receiving module is configured to receive the operation result sent by the target device based on a direct connection transmission channel in a case where the direct connection transmission channel is established between the target device and the first device; or
to receive the operation result sent by the target device and returned by the server in a case where the direct connection transmission channel is not established between the target device and the first device.

In some embodiments, the operation result includes:
image information captured by the target device;
electronic signature information collected by the target device;
biometric information collected by the target device; and
audio information collected by the target device.

In some embodiments, the editing module is particularly configured to perform at least one of:
inserting the image information into the document;
inserting a link address of the audio information into the document;
inserting text information corresponding to the audio information into the document;
inserting the electronic signature information into the document; and
responding to an editing operation performed on the document by an input module of the first device when it is verified according to the biological feature information that the first device has editing permission.

In some embodiments, the first sending module 120 is further configured to send the document information to the target device in a case where the type of the target operation is the second type, in which the document is configured for input of the target device.

In some embodiments, the first sending module 120 is further configured to send the document to the server in a case where the direct connection transmission channel is not established between the target device and the first device, in which the document is forwarded to the target device by the server.

In some embodiments, the first sending module 120 is further particularly configured to receive the device information of the target device returned by the server in a case where the direct connection transmission channel is established between the target device and the first device; and to send the document information to the target device through the direct connection transmission channel according to the device information.

In some embodiments, the apparatus further includes:
a second determination module configured to determine that the direct connection transmission channel is established between the target device and the first device in a case where the target device and the first device are connected to a same software bus.

In some embodiments, the first receiving module is further configured to receive device information of the alternative devices returned by the server; the alternative devices being second devices capable of performing the target operation;
the apparatus further includes:
a detecting module configured to detect a selection operation of the device information on the alternative devices; and
a target device module configured to determine the target device according to the selection operation.

As shown in FIG. 13, an embodiment of the present disclosure provides an apparatus for document processing, which includes:
a second receiving module 210 configured to receive a request message sent by a first device; the request message including operation information of a target operation; and
a third determination module 220 configured to at least determine alternative devices capable of performing the target operation according to the request message and capability information of at least one second device, the target device among the alternative devices being configured to assist the first device in performing the target operation.

The apparatus for file processing may be included in a server. The server includes but is not limited to an application server.

In some embodiments, the second receiving module 210 and the third determination module 220 may be program modules, and the program modules can implement the above operations after being executed by the processor.

In other embodiments, the second receiving module 210 and the third determination module 220 may be a software and hardware combined module; software and hardware combination includes but is not limited to a programmable array; the programmable array includes but is not limited to a field programmable array and/or a complex programmable array.

In still other embodiments, the second receiving module 210 and the third determination module 220 may be a totally hardware module which includes but is not limited to a dedicated integrated circuit.

In some embodiments, a type of the target operation includes:
a first type configured to provide input information for document processing; and/or
a second type configured to output document information.

In some embodiments, the apparatus further includes:
a third determination module 220 configured to determine whether the direct connection transmission channel is established between the target device and the first device in a case where the type of the target operation is the first type;
a second sending module configured to send first indication information to the target device according to the request message in a case where the direct connection transmission channel is established between the target device and the first device, in which the first indication information is configured to instruct the target device to perform the target operation based on the direct connection transmission channel; or to send second indication information to the target device according to the request message in a case where the direct connection transmission channel is not established between the target device and the first device, in which the second indication information is configured to instruct the target device to perform the target operation and return the operation result of the target operation to the server, and the operation result is sent to the first device by the server.

In some embodiments, the third determination module 220 is particularly configured to determine the target device that performs the target operation according to the request message, the capability information of at least one second device, and the preset information.

In some embodiments, the third determination module 220 is further configured to determine the target device that performs the target operation from the alternative devices according to preset information.

In some embodiments, the third determination module 220 is particularly configured to in a case where it is determined that there is no alternative device according to the request message and the capability information of at least one second device, use the second device whose execution capability has a highest degree of matching with the capability required for the target operation as the target device.

In some embodiments, the third determination module 220 is further configured to select the target device from the second devices that can perform the target operation according to the preset information and a first type of selection strategy in a case where there are a plurality of alternative devices; or send device information of the alternative devices to the first device according to the preset information and a second type of selection strategy in a case where there are a plurality of alternative devices, in which the device information of the alternative devices is configured for the first device to select the target device.

Third determination module 220 is particularly configured to selecting an alternative device with a shortest distance from the first device as the target device according to the preset information and a distance shortest strategy;
selecting a second device which can perform the target operation and whose active condition meets preset conditions as the target device according to the preset information and a distance shortest strategy; and
selecting a second device which can perform the target operation and has a direct connection transmission channel with the first device as the target device according to the preset information and a direct connection transmission channel priority strategy.

In still some embodiments, the third determination module 220 is particularly configured to perform one of the following:
selecting a second device which can perform the target operation and with a highest active frequency as the target device according to the preset information and the active condition priority strategy;
selecting a second device which can perform the target operation and is currently active as the target device according to the preset information and the active condition priority strategy; and
selecting a second device which can perform the target operation and is active at last as the target device according to the preset information and the active condition priority strategy.

In some embodiments, the apparatus further includes:
a second receiving module configured to return the device information of the alternative devices to the first device, the device information of the alternative devices being configured for the first device to select the target device, or return the device information of the target device to the first device.

With regard to the apparatus in the above embodiment, a specific way in which respective modules perform operations has been described in detail in the embodiment of the method, and will not be described in detail herein.

An embodiment of the present disclosure further provides an electronic device, including:
a processor; and
a memory configured to store processor-executable instructions.

The processor is configured to realize the method for document processing of any of embodiments of the disclosure when running the executable instructions.

The electronic device may be the first device or the server described above. The server may be a cloud server, specifically, an application server and/or a management server of a software bus.

The memory can include various types of storage media, which are nonvolatile computer storage media and can continue to remember information stored thereon when a communication device is powered off.

The processor can be connected to the memory through a bus or the like for reading executable programs stored in the memory, for example, to implement the method for document processing shown in any one of FIGS. 1 to 4 and 6 to 11.

An embodiment of the present disclosure further provides a computer-readable storage medium in which an executable program is stored. The executable program, when executed by a processor, implements the method for document processing of any of embodiments of the present disclosure. For example, the method for document processing shown in any one of FIGS. 1 to 4 and 6 to 11 is implemented.

With regard to the apparatus in the above embodiment, a specific way in which respective modules perform operations has been described in detail in the embodiment of the method, and will not be described in detail herein.

An embodiment of the disclosure provides an electronic device including: a processor; and a memory configured to store processor executable instructions, in which the processor is configured to implement the method for document processing provided by any of the aforementioned technical solutions, for example, the method for document processing of any one of FIGS. 1 to 4 and FIGS. 6 to 11 when running the executable instructions.

As shown in FIG. 14, an embodiment of the present disclosure shows a structure of an electronic device. The electronic device may be the first device, the server and/or the target device described above.

For example, the electronic device 900 can be provided as a network-side device. Referring to FIG. 14, the electronic device 900 includes a processing component 922, which further includes one or more processors and memory resources represented by a memory 932 for store instructions, such as an application program, executable by the processing component 922. The application program stored in the memory 932 may include one or more modules each corresponding to a set of instructions. In addition, the processing component 922 is configured as an executable program to execute any of the methods describe above applied to a device, for example, the method for document processing shown in any one of FIGS. 1 to 4 and 6 to 11.

The electronic device 900 may further include a power component 926 configured to perform power management of the electronic device 900, a wired or wireless network interface 950 configured to connect the electronic device 900 to a network, and an input/output (I/O) interface 958. The electronic device 900 can operate based on an operating system stored in the memory 932, such as Windows Server TM, Mac OS XTM, UnixTM, LinuxTM, FreeBSDTM or the like.

An exemplary embodiment of the disclosure provides a computer-readable storage medium in which an executable program is stored, in which the executable program implements the method for document processing provided by any of the aforementioned technical solutions, for example, the method for document processing of any one of FIGS. 1 to 4 and FIGS. 6 to 11 when executed by a processor.

The computer-readable storage medium can specifically be a nonvolatile computer-readable storage medium.

For example, for example, the computer-readable storage medium can the memory 932 including an executable program, the above instructions can be executed by the processing component 922 of the electronic device 900 to complete the above method.

The nonvolatile computer-readable storage media can be a ROM, a random access memory (RAM), a CD-ROM, a magnetic tape, a floppy disk and an optical data storage device.

Other embodiments of the disclosure will be readily conceived to those skilled in the art from consideration of the description and practice of the invention disclosed herein. The disclosure is intended to cover any variations, uses, or adaptations of the disclosure following the general principles of the disclosure and including common knowledge or customary technical means in the art not disclosed in the disclosure. The description and embodiments are considered as exemplary only, and the scope and spirit of the disclosure are indicated by the following claims.

It should be understood that the present disclosure is not limited to the precise structure described above and shown in the drawings, and various modifications and changes can be made without departing from the scope. The scope of the present disclosure is limited only by the appended claims.

## Claims

1. A method for document processing which is performed by a first device, comprising:
determining whether there is a target operation that needs assistance in a case where the first device processes a document; and
sending a request message to a server in a case where there is the target operation, wherein
the request message is configured for the server to select alternative devices based on capability information of at least one second device, and a target device among the alternative devices is configured to perform the target operation.

2. The method according to claim 1, before sending the request message, further comprising:
determining first attribute information of the target operation, the first attribute information being configured to indicate one or more target attributes that the target device is required to possess.

3. The method according to claim 2, wherein the request message comprises the first attribute information; and
the first attribute information is configured for the server to select the target device with the one or more target attribute from the alternative devices, or for the server to select an alternative device according to the first attribute information, the capability information of at least one second device, and second attribute information.

4. The method according to claim 2, after sending the request message, further comprising:
receiving second attribute information of the alternative devices; and
selecting the target device with the one or more target attributes from the alternative devices according to the first attribute information and the second attribute information.

5. The method according to any one of claims 1 to 4, further comprising:
receiving the operation result obtained by the target device performing the target operation, and processing the document according to the operation result; or
sending document information to the target device, the document information being configured for the target device to perform the target operation.

6. The method according to any one of claims 1 to 4, comprising:
receiving the operation result sent by the target device based on a direct connection transmission channel in a case where the direct connection transmission channel is established between the target device and the first device; or
interacting information required for performing the target operation with the target device in a case where the direct connection transmission channel is not established between the target device and the first device.

7. The method according to any one of claims 1 to 4, further comprising:
determining third devices to which the first device has been connected or is connectable in a case where there is the target operation;
displaying device information of the third devices; and
said sending the request message to the server in a case where there is the target operation, comprising:
sending the request message to the server in a case where a device information selection operation for the third devices is not detected;
or
selecting the target device which performs the target operation from the third devices in a case where a device information selection operation acting on the third devices is detected.

8. A method for document processing which is performed by a server, comprising:
receiving a request message sent by a first device; the request message comprising operation information of a target operation on a document; and
determining alternative devices capable of performing the target operation according to the request message and capability information of at least one second device, the target device among the alternative devices being configured to assist the first device in performing the target operation.

9. The method according to claim 8, further comprising:
returning the device information of the alternative devices to the first device, the device information of the alternative devices being configured for the first device to select the target device; or
returning the device information of the target device to the first device.

10. An apparatus for document processing, comprising:
a first determination module configured to determine whether there is a target operation that needs assistance in a case where a first device processes a document; and
a first sending module configured to send a request message to a server in a case where there is the target operation, the request message being configured for the server to select alternative devices based on capability information of at least one second device, and a target device among the alternative devices being configured to perform the target operation.

11. An apparatus for document processing, comprising:
a second receiving module configured to receive a request message sent by a first device; the request message comprising operation information of a target operation; and
a third determination module configured to at least determine alternative devices capable of performing the target operation according to the request message and capability information of at least one second device, the target device among the alternative devices being configured to assist the first device in performing the target operation.

12. An electronic device comprising:
a processor; and
a memory configured to store processor executable instructions, wherein
the processor is configured to implement the method for document processing according to any one of claims 1 to 7 or any one of claims 8 to 9 when running the executable instructions.

13. A computer-readable storage medium in which an executable program is stored, wherein the executable program implements the method for document processing according to any one of claims 1 to 7 or any one of claims 8 to 9 when executed by a processor.
